# EUROPEAN PATENT SPECIFICATION

(11) **EP 3 339 004 B1**
(45) Date of publication and mention of the grant of the patent: **08.01.2025**
(21) Application number: 17210565.2
(22) Date of filing: 25.12.2017
(51) Int. Cl.: B29C 65/02, B31B 70/00, B31B 70/64, B31B 70/74, B31B 70/82, B65B 25/04, B65B 61/16, B31B 70/86, B65D 30/06, B65D 30/20, B65D 33/04, B65D 33/08, B65D 85/34, D21H 19/28, D21H 27/10, B29L 28/00, B29L 31/46, B31B 170/20

(54) **PACKAGING MATERIAL FOR BAG-SHAPED PACKAGING**
VERPACKUNGSMATERIAL FÜR BEUTELFÖRMIGE VERPACKUNGEN
MATÉRIAU D'EMBALLAGE POUR EMBALLAGE EN FORME DE SACHET

(30) Priority: 25.12.2016 PL 41997216
(43) Date of publication of application: 27.06.2018
(73) Proprietor: SILBO Sp. z o.o., 44-240 Zory (PL)
(72) Inventor: Spiewok, Marcin, 44-203 Rybnik (PL)
(74) Representative: Tyrala, Magdalena

(56) References cited:
- EP-A2- 2 762 416
- BE-A6- 1 015 371
- DE-A1- 2 446 007
- KR-A- 20020 046 268
- SE-B- 323 576
- US-A- 3 454 441
- US-A- 4 403 637

## Description

The object of the invention is a material intended for a packaging in the shape of a bag for packaging products, mainly foodstuffs, in particular fruits and vegetables.

Fruits and vegetables sold in self-service large format stores are previously packaged in the packagings and delivered to the store in this form. Most often this applies to vegetables such as onions, potatoes, or fruits such as apples. This is convenient both for the seller and the buyer because the product is already weighed and packaged. Polyethylene or polypropylene film as well as a paper and film composite is used as a packaging material. Foodstuffs such transported and stored require aeration. Therefore, it is often combined with a mesh that not only provides aeration but also allows the buyer to see and touch the goods inside the packaging. The packaging is made by machine, usually at the manufacturer's site, in such a way that the machine welds or glues into a tubular body and then welds or glues and cuts off individual modules from the roll of previously prepared continuous film band containing appropriate prints and connected to the bands or mesh windows. In such prepared modules fruits or vegetables are packed and then the packaging with the contents is glued or welded.

Various methods are known for combining a film with a mesh and various products formed using these methods.

European patent application EP2441698A1 discloses a packaging made of a continuous band, where there are longitudinal continuous strips of PE plastic and longitudinal continuous strips of a PP mesh. Individual strips overlap and here they are joined by means of an additional narrow PE strip applied to the mesh, which after welding connects to a PE plastic strip through the mesh holes. This invention solves the problem of joining two different materials namely PE and PP, which cannot be joined directly by welding. In Spanish patent specification ES2214142 individual bands of material are joined using a strip of polyethylene resin. In another Spanish specification ES2239920 successive strips are connected by means of glue melting under the influence of temperature. According to a Spanish specification ES2204271 (EP2070831) plastic sheet has been die-cut to seal in the mesh fragments.

Application P.402682 describes a packaging material, in particular for fruits and vegetables in the form of a continuous band, joined by welding with overlapping mesh elements, in which the continuous band is paper coated with a polyolefin on at least one side. The polyolefin coating allows the paper to be joined with the mesh by welding. The object of the invention is also a method of producing a packaging material. The advantage of this invention is to reduce the consumption of plastic materials that have an adverse effect on the environment. Lack of reinforcements in the places designated for handles causes the finished packagings to be damaged during handling in these areas.

Application P.410324 discloses a continuous band of plastic-coated paper for the production of bags for fruit and vegetable produce and similar products, made from plastic-coated paper and provided with polyethylene reinforcements at the welding zones, the handles and, where applicable, along the periphery of the windows, in order to increase the mechanical strength thereof. The windows are closed with fragments of mesh. A significant amount of polyethylene reinforcements negatively affects the aesthetics of the packaging and the natural environment. In addition, it creates a problem of a film depositing on the heaters of the welding machine.

Material designed for production of packaging is disclosed in EP2762416 (A2). Material has the form of a continuous band joined by welding with overlapping mesh elements. Continuous band is made of paper coated with polyolefin on at least one side. The polyolefin coating allows joining the paper with the mesh by means of the welding method. The invention also relates to the method of producing the packaging material in the form of a continuous band containing mesh elements consists in coating of at least one side of continuous paper band with polyolefin, then placing the mesh on the coated side of paper in such a manner that the part of it is superimposed on the paper and forms an overlap, and finally this part is subjected to welding at the temperature within the range of 180 - 300°C.

BE1015371 discloses a roll materialized in a lamellar body paper, of adequate width to that provided for the bags to obtain and of indefinite length, said lamellar body having on one of its longitudinal edges a bead of glue rapid-drying thermal device, which allows its attachment to the opposite edge so as to give a tubular body, fragmentable in portions corresponding to the respective bags which close by means of transverse beads of thermal glue and which is also originally the lamellar body constituting the roller. In addition, each module corresponding to a bag may carry one or more windows for aeration and / or visualization of the inside of the bag, closed by means of a mesh sheet also attached to the bag by means of a glue bead.

DE2446007 (A1) discloses carrier bags esp. of plastics, which have a reinforced holding strip the upper face of one wall of an open-sided tube is folded back on itself to length equal to the width of the reinforcing strip, the reinforcing strips are then applied onto the inner side walls using the same apparatus.

KR20020046268 (A) discloses device and method for producing plastic bag, the device comprises several units, among of which there is a handle reinforcing member textile attaching a handle reinforcing member to the plastic bag.

US4403637 (A) discloses a reinforced flexible container which includes a mesh bag having opposite ends and first and second bands of flexible material having opposite ends. The bands are positioned on opposite sides of the bag, with the opposite ends of the bands covering and being joined to respective opposite ends of the bag, and with the bag and the bands being free of any connection or joining between the opposite ends. One joined end of the bag and bands has formed therethrough a carrying opening.

The object of the invention is to prepare a packaging material for packaging machines using a welding method that would eliminate the problem of damage during handling, handles of finished packaging, improve the aesthetics of finished packaging and enable to make the holes with various holes adapted to the graphic concept. The object of the invention is also to eliminate the problem of film depositing on the heaters. In addition, such a material should reduce the consumption of plastics in packaging, which has a positive ecological effect.

A first aspect of the invention is a packaging material as defined in claim 1.

In a preferred embodiment, a weld area between the band and one mesh element is smaller than the overlap area of said mesh element.

In a further preferred embodiment, a band is a paper composite coated with a biodegradable polymer on both sides.

In another embodiment the band is a paper composite coated with PP on one side with a thickness of 10g/m² and PE on the other side with a thickness of 12g/m².

In another embodiment, the mesh is made of PE, PP, PLA or cellulose with a density of 20 to 60 g/m².

A second aspect of the invention is a method of producing a packaging material according to claim 6.

In another preferred embodiment of the method, the paper band is polymer-coated on at least one side in a discontinuous way.

Polyethylene is defined as PE abbreviation, polypropylene is defined as PP abbreviation, polylactide is defined as PLA.

The advantage of the invention is the reinforcement of the places of handles of finished packaging. In places reinforced with a mesh the handles do not tear. The advantage of the invention is also the ease and speed of the material's manufacture, as well as the significantly improved design and graphic appearance of the finished packaging. Up to now, the holes in the packaging have had a substantially rectangular shape. The holes in the packaging according to the invention may have a circular oval shape or reflect the shape of the products contained in the packaging - e.g. potatoes or onions. Any shape of the holes can be correlated with the graphic design of the packaging. The advantage of the invention is a significant reduction in the consumption of plastics in the production of packaging. In addition, due to the replacement of plastic with paper, the problem of film depositing on the heating elements of packaging machines using the welding method was eliminated.

The invention in the exemplary embodiment is shown in the drawing where:

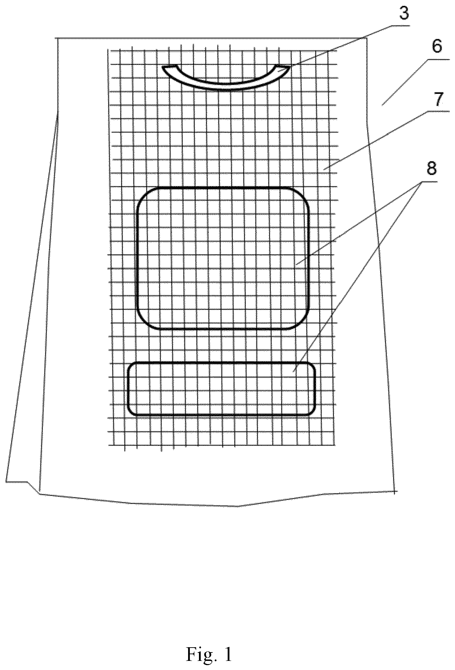

Fig. 1 shows a view of a finished packaging with sealed mesh elements in the places designated for packaging handles and at the windows,

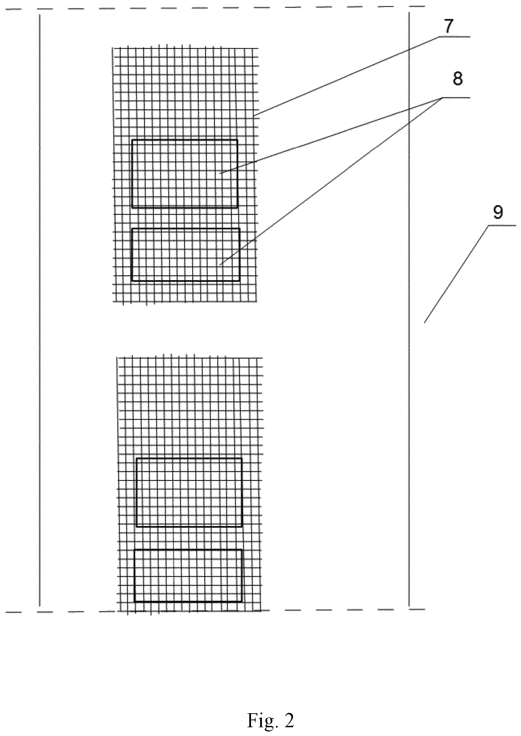

Fig. 2 shows a view of the material in the form of a band from the side with sealed mesh elements in the places designated for packaging handles, in the embodiment with rectangular windows.

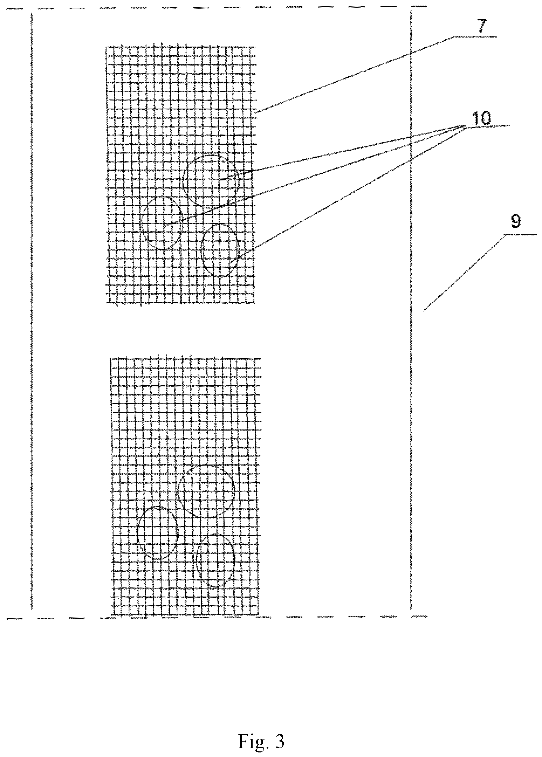

Fig. 3 shows a view of the material in the form of a band from the side with sealed mesh elements in the places designated for packaging handles, in the embodiment with oval windows.

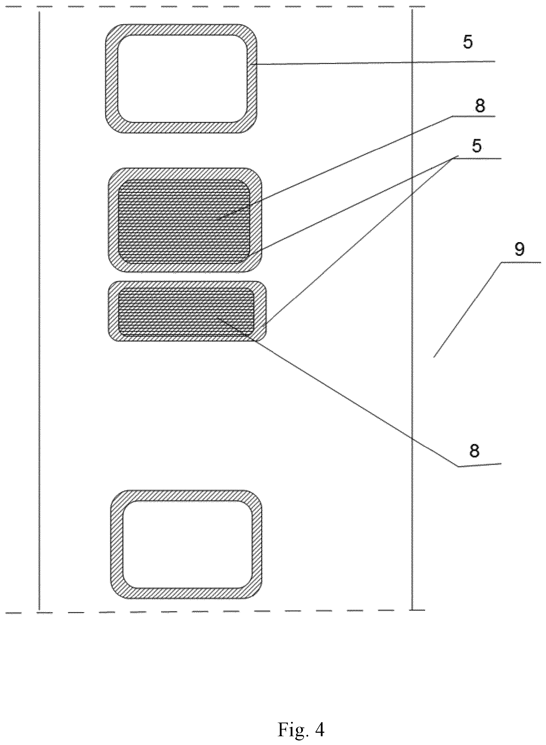

Fig. 4 shows a view of the material in the form of a band from the outside with visible weld areas with mesh elements designated for packaging handles located from the, in the embodiment with rectangular windows.

### Example 1.

The invention in the embodiment is a material for making a bag-shaped packaging 1 with at least one longitudinal handle cut out inside 3. The material is a band 4 made of a polyolefin-coated paper in the form of PE polyethylene and the mesh elements 2, also of PE are in places designated for the handle 3 of the finished packaging 1 and are directly joined by welding at the overlap with the PE-coated continuous band 4. The weld area 5 is guided by a band 1 cm wide along the perimeter of the mesh 2. Thus, the weld area 5 is smaller than the overlap area of the mesh 2 and the band 4.
The band 9 is a FSC paper with a weight of 60 g/m2, PE-coated on one side with a weight of 10 g/m2 and PE on the other side with a weight of 12 g/m2. The band 9 comprises holes 8 with a rectangular shape and elements of polyethylene mesh 7 type CLAF^{®} (cross laminated airy fabric) with a thickness of 22 g/m2 also overlap these holes 8. Elements of the mesh 7 constitute one continuous band comprising a space designated for the packaging handle 3 and the holes 8 locations of a single packaging 6.

### Example 2.

In another embodiment, oval holes were cut out in the material described in Example 1 and the material of a mesh 7 as described in Example 1 was sealed into the spaces designated for the spaces designated for the handle 3 and holes 8.

### Example 3.

For the material described in Example 1 FSC paper was used with a weight of 60 g/m2, PP-coated on one side with a thickness of 10g/m2 and PE on the other side with a thickness of 12g/m2.

### Example 4

For the material described in Example 1 FSC paper was used with a weight of 60 g/m2, coated with a biodegradable polymer SUSTAINEX^{®} 20 gsm on both sides.

### Example 5

For the material described in Example 1 or 3, PP mesh with a weight of 20 g/m2 was used.

### Example 6.

For the material described in Example 1 or 3, PLA mesh with a weight of 22 g/m2 was used.

### Example 7.

For the material described in Example 1 or 3, cellulose mesh with a weight of 22 g/m2 was used.

### Example 8.

In another embodiment, not being a part of invention, the band 9 is a FSC paper with a weight of 60 g/m2, PE-coated on one side with a weight of 10 g/m2 and PE on the other side with a weight of 12 g/m2. The band 9 comprises holes 8 with a rectangular shape and elements of polyethylene mesh 7 type CLAF^{®} (cross laminated airy fabric) with a thickness of 22 g/m2 are sealed into the spaces designated for the handle 3. The holes 8 are covered with the PE film directly joined with the band 9 by welding. The weld is guided along the circumference of the PE film at the locations where it overlaps the band 9.

### Example 9

For the material described in Example 1 paper coated with the polymer in a discontinuous way was used. The discontinuity consists in the fact that on the microscopic scale the surface of the polymer has holes - pores.

### Example 10.

A method of producing a material for the packaging of fruits and vegetables in the shape of a bag with at least one handle cut out inside, where the material is a band comprising mesh elements. The paper bands 9 are polymer-coated on at least one side, then a mesh 7 is applied onto the band from the coating side at least in the area designated for the packaging handle 3, and then this part is subjected to welding at a temperature ranging from 160-180 °C, preferably 170 °C. in the weld area 5 smaller than the overlap of the mesh 7 and the band 9, the heater being applied from the side of the paper band 9. Holes 8,10 of any shape are additionally cut out in a continuous paper band 9 and then one continuous mesh band is applied onto the area designated for a packaging handle and the area of holes and welded at the overlap of the mesh and the band.

### Example 11

A method described in Example 13 or 14 except that the paper band is polymer-coated on at least one side in a discontinuous way. The discontinuity consists in the fact that on the microscopic scale the surface of the polymer has holes - pores.

The invention is applicable in the industry producing packaging materials as well as in the food industry and logistics.

## Claims

1. A material for a packaging in the shape of a bag with at least one cut out handle (3) inside, where the material is a continuous band (9) of paper coated with a polymer on at least one side, joined by welding with overlapping elements of a polymeric mesh (7), wherein
the band (9) is a paper coated with biopolymer or polyolefin chosen among PE polyethylene or PP polypropylene and
the mesh elements (7) are at least in places designated for the handle (3) of a finished packaging (6),
wherein the mesh elements (7) are directly joined by welding at the overlap with the polymer coated band (9),
wherein the band (9) comprises holes (8) of any shape, and,
**characterized in that** the polymeric mesh elements (7) also overlap these holes (8) in such a way that each mesh element (7) constitutes one continuous band which covers a space intended for the handle (3) of the packaging (6) and the places of holes (8) of a single packaging (6).

2. A material according to claim 1, **characterized in that** a weld area (5) between the band (9) and one mesh element (7) is smaller than the overlap area of said mesh element (7).

3. A material according to claim 1, **characterized in that** the mesh (7) is made of PE, PP, PLA or cellulose with a density of 20 to 60 g/m2.

4. A material according to claim 1, **characterized in that** the band (9) is a paper composite coated with PP on one side with a thickness of 10g/m2 and PE on the other side with a thickness of 12g/m2

5. A material according to claim 1, **characterized in that** the band (9) is a paper composite coated with a biodegradable polymer on both sides.

6. A method of producing a material according to claim 1 for a packaging of/for fruits and vegetables in the shape of a bag with at least one handle (3) cut out inside, the method comprising the steps of:
- coating the paper band (9) on at least one side with a polymer coating,
- cutting out holes (8, 10) of any shape in the paper band (9),
- subsequently to these two steps, applying each mesh element (7) onto the paper band (9) from the coating side thereof on to the area designated for the handle (3) of the packaging (6) and the area of holes (8, 10) of a single packaging (6), and
- then welding the mesh elements (7) with the paper band (9) at a temperature ranging from 160-180 °C at the overlap of the mesh and the paper band, the heater being applied from the side of the paper band (4, 9).

7. The method according to claim 6 the paper band (9) is polymer-coated on at least one side in a discontinuous way.

## Patentansprüche

1. Material für eine Verpackung in Form einer Tüte mit mindestens einem ausgeschnittenen Griff (3) im Inneren, wobei das Material ein durchgehendes Band (9) aus Papier ist, das auf mindestens einer Seite mit einem Polymer beschichtet ist und durch Schweißen mit überlappenden Elementen eines Polymernetzes (7) verbunden ist, wobei
das Band (9) ein mit Biopolymer oder Polyolefin beschichtetes Papier ist, ausgewählt aus PE-Polyethylen oder PP-Polypropylen, und
die Netzelemente (7) sich zumindest an Stellen befinden, die für den Griff (3) einer fertigen Verpackung (6) vorgesehen sind,
wobei die Netzelemente (7) direkt durch Schweißen an der Überlappung mit dem polymerbeschichteten Band (9) verbunden sind,
wobei das Band (9) Löcher (8) beliebiger Form aufweist, und
**dadurch gekennzeichnet, dass** die Polymernetzelemente (7) diese Löcher (8) auch so überlappen, dass jedes Netzelement (7) ein durchgehendes Band bildet, das einen für den Griff (3) der Verpackung (6) vorgesehenen Raum und die Stellen der Löcher (8) einer einzelnen Verpackung (6) abdeckt.

2. Material nach Anspruch 1, **dadurch gekennzeichnet, dass** eine Schweißfläche (5) zwischen dem Band (9) und einem Maschenelement (7) kleiner ist als die Überlappungsfläche des Maschenelements (7).

3. Material nach Anspruch 1, **dadurch gekennzeichnet, dass** das Maschenelement (7) aus PE, PP, PLA oder Zellulose mit einer Dichte von 20 bis 60 g/m2 besteht.

4. Material nach Anspruch 1, **dadurch gekennzeichnet, dass** das Band (9) ein Papierverbund ist, der auf einer Seite mit PP mit einer Dicke von 10 g/m2 und auf der anderen Seite mit PE mit einer Dicke von 12 g/m2 beschichtet ist.

5. Material nach Anspruch 1, **dadurch gekennzeichnet, dass** das Band (9) ein Papierverbund ist, der auf beiden Seiten mit einem biologisch abbaubaren Polymer beschichtet ist.

6. Verfahren zur Herstellung eines Materials nach Anspruch 1 für eine Verpackung von/für Obst und Gemüse in Form einer Tüte mit mindestens einem innen ausgeschnittenen Griff (3), wobei das Verfahren die Schritte umfasst:
- Beschichten des Papierbandes (9) auf mindestens einer Seite mit einer Polymerbeschichtung,
- Ausschneiden von Löchern (8, 10) beliebiger Form in das Papierband (9),
- anschließend an diese beiden Schritte Aufbringen jedes Maschenelements (7) auf das Papierband (9) von der Beschichtungsseite her auf den für den Griff (3) der Verpackung (6) vorgesehenen Bereich und den Bereich der Löcher (8, 10) einer einzelnen Verpackung (6), und
- anschließendes Verschweißen der Maschenelemente (7) mit dem Papierband (9) bei einer Temperatur im Bereich von 160-180 °C an der Überlappung des Maschenelements und des Papierbandes, wobei die Heizung von der Seite des Papierbandes (4, 9) heraufgebracht wird.

7. Verfahren nach Anspruch 6, **dadurch gekennzeichnet, dass** das Papierband (9) zumindest auf einer Seite diskontinuierlich mit einem Polymer beschichtet wird.

## Revendications

1. Matériau pour emballage sous forme de sac avec au moins une poignée découpée (3) à l'intérieur, où le matériau est une bande continue (9) de papier revêtue d'un polymère sur au moins un côté, jointe par soudage à des éléments superposés d'un treillis polymère (7), où
la bande (9) est un papier revêtu de biopolymère ou de polyoléfine choisi parmi le polyéthylène PE ou le polypropylène PP et
les éléments de treillis (7) sont au moins aux endroits désignés pour la poignée (3) d'un emballage fini (6),
où les éléments de treillis (7) sont directement joints par soudage au niveau du chevauchement avec la bande revêtue de polymère (9),
où la bande (9) comprend des trous (8) de forme quelconque, et,
**caractérisé en ce que** les éléments de treillis polymère (7) chevauchent également ces trous (8) de telle manière que chaque élément de treillis (7) constitue une bande continue qui recouvre un espace destiné à la poignée (3) de l'emballage (6) et les emplacements des trous (8) d'un seul emballage (6).

2. Matériau selon la revendication 1, **caractérisé en ce qu'**une zone de soudure (5) entre la bande (9) et un élément de treillis (7) est plus petite que la zone de chevauchement dudit élément de treillis (7).

3. Matériau selon la revendication 1, **caractérisé en ce que** le treillis (7) est en PE, PP, PLA ou cellulose avec une densité de 20 à 60 g/m².

4. Matériau selon la revendication 1, **caractérisé en ce que** la bande (9) est un composite de papier revêtu de PP sur une face avec une épaisseur de 10 g/m2 et de PE sur l'autre face avec une épaisseur de 12 g/m².

5. Matériau selon la revendication 1, **caractérisé en ce que** la bande (9) est un composite de papier revêtu d'un polymère biodégradable sur les deux faces.

6. Procédé de fabrication d'un matériau selon la revendication 1 pour un emballage de fruits et légumes en forme de sac avec au moins une poignée (3) découpée à l'intérieur, le procédé comprenant les étapes suivantes :
- enduire la bande de papier (9) sur au moins un côté avec un revêtement polymère,
- découper des trous (8, 10) de forme quelconque dans la bande de papier (9),
- après ces deux étapes, appliquer chaque élément de treillis (7) sur la bande de papier (9) depuis le côté revêtement de celle-ci sur la zone destinée à la poignée (3) de l'emballage (6) et la zone des trous (8, 10) d'un seul emballage (6), et
- souder ensuite les éléments de treillis (7) avec la bande de papier (9) à une température comprise entre 160 et 180 °C au niveau du chevauchement du treillis et de la bande de papier, le chauffage étant appliqué depuis le côté de la bande de papier (4, 9).

7. Procédé selon la revendication 6, dans lequel la bande de papier (9) est revêtue de polymère sur au moins un côté de manière discontinue.
